# EUROPEAN PATENT APPLICATION

(11) **EP 4 418 417 A1**
(43) Date of publication of application: **21.08.2024**
(21) Application number: 22896149.6
(22) Date of filing: 18.11.2022
(51) Int. Cl.: H01M 50/179, H01M 50/538, H01M 50/342, H01M 50/559, H01M 50/169, H01M 50/107

(54) **SECONDARY BATTERY AND BATTERY PACK**

(30) Priority: 19.11.2021 KR 20210160477; 17.10.2022 KR 20220133231
(71) Applicant: LG Energy Solution, Ltd., Seoul 07335 (KR)
(72) Inventor: HWANG, Dongsung, Daejeon 34122 (KR); JIN, Seung Kyun, Daejeon 34122 (KR); LIM, Hae Jin, Daejeon 34122 (KR); KIM, Minwoo, Daejeon 34122 (KR); PARK, Jeongho, Daejeon 34122 (KR); SHIN, Hangsoo, Daejeon 34122 (KR)
(74) Representative: Goddar, Heinz J.
(86) International application number: PCT/KR2022/018346
(87) International publication number: WO 2023/090952

(57) **Abstract**

The present invention relates to a secondary battery including: an electrode assembly; a case opened on one side and configured to accommodate the electrode assembly therein; a vent coupled to the opening of the case; and a first current collecting plate electrically connected to the electrode assembly, in which the first current collecting plate is welded and electrically connected to at least one of the case and the vent.

## Description

### [Technical Field]

This application claims priority to and the benefit of Korean Patent Application No. 10-2021-0160477 filed in the Korean Intellectual Property Office on November 19, 2021 and Korean Patent Application No. 10-2022-0133231 filed in the Korean Intellectual Property Office on October 17, 2022, the entire contents of which are incorporated herein by reference.

The present invention relates to a secondary battery. Specifically, the present invention relates to a secondary battery where a space in which the secondary battery realizes energy is maximized.

### [Background Art]

In general, a secondary battery refers to a battery that is chargeable and dischargeable unlike a primary battery that are not chargeable, and the secondary battery is widely used in the field of high-tech electronic devices such as a phone, a laptop computer and a camcorder.

The stability of the secondary battery may be secured by a test for stability in which one side is compressed with a press to measure an internal short.

Depending on a shape of a battery case, the secondary battery is classified into a cylindrical battery and a prismatic battery in which an electrode assembly (or battery assembly) is embedded in a cylindrical or prismatic metal case, and a pouch battery in which an electrode assembly is embedded in a pouch-type case made of an aluminum laminate sheet.

In addition, the electrode assembly embedded in the battery case is a chargeable/dischargeable power generating device having a laminate structure of a positive electrode/separator/a negative electrode, and is classified into a folding type electrode assembly (jelly-roll) in which long sheet-like positive electrode and negative electrode coated with active materials are wound with a separator being interposed therebetween, and a stack type electrode assembly in which a plurality of positive electrodes and negative electrodes having predetermined sizes are sequentially stacked with separators interposed therebetween. Among them, the jelly-roll has advantages in that it is easy to manufacture and has a high energy density per weight.

A conventional secondary battery includes a structure of a beading part and a crimping part of a case, so that an internal space of the case where energy is realized is limited by a physically occupying space such as widths and heights of the beading part and the crimping part.

### [Detailed Description of the Invention]

### [Technical Problem]

The present invention has been made in view of the problems of the related art described above, and is intended to provide a secondary battery where a space in which the secondary battery realizes energy is maximized.

### [Technical Solution]

An exemplary embodiment of the present invention provides a secondary battery including: an electrode assembly; a case opened on one side and configured to accommodate the electrode assembly therein; a vent coupled to the opening of the case; and a first current collecting plate electrically connected to the electrode assembly, in which the first current collecting plate is welded and electrically connected to at least one of the case and the vent.

An exemplary embodiment of the present invention provides the secondary battery including a first weld portion where the first current collecting plate and the case are welded, and a third weld portion where the first current collecting plate and the vent are welded.

An exemplary embodiment of the present invention provides the secondary battery in which the first weld portion and the third weld portion are located along a circumference of an outer surface of the vent.

An exemplary embodiment of the present invention provides the secondary battery in which a diameter of the vent is smaller than a diameter of an inner wall of the case.

An exemplary embodiment of the present invention provides the secondary battery including a first weld portion where the first current collecting plate and the case are welded, and a second weld portion where the case and the vent are welded.

An exemplary embodiment of the present invention provides the secondary battery in which the first weld portion and the second weld portion are located along a circumference of an inner wall of the case.

An exemplary embodiment of the present invention provides the secondary battery in which a diameter of the vent is smaller than a diameter of an inner wall of the case.

An exemplary embodiment of the present invention provides the secondary battery in which the case includes a first case adjacent to the opening and having a first case thickness, and a second case having a second case thickness thicker than the first case, and in which the second case thickness is three times or less than the first case thickness.

An exemplary embodiment of the present invention provides the secondary battery in which a length of the first case is 5% or less based on 100% of a total length of the case.

An exemplary embodiment of the present invention provides the secondary battery in which the vent includes a first vent having a first vent thickness in an outward direction from a center and a second vent having a second vent thickness smaller than the first vent thickness, and in which the first vent thickness is three times or less than the second vent thickness.

An exemplary embodiment of the present invention provides the secondary battery including a second weld portion where a contact surface of the case and the vent is welded, and a third weld portion where a contact surface of the first current collecting plate and the vent is welded.

An exemplary embodiment of the present invention provides the secondary battery in which the second weld portion is located along a circumference of the vent and the third weld portion is located along a circumference of a lower surface of the vent.

An exemplary embodiment of the present invention provides the secondary battery in which the case includes a first case adjacent to the opening and having a first thickness, and a second case thicker than the first case, and in which the thickness of the second case is three times or less than the thickness of the first case.

An exemplary embodiment of the present invention provides the secondary battery in which a length of the first case is 5% or less based on 100% of a total length of the case.

An exemplary embodiment of the present invention provides the secondary battery in which the vent includes a first vent having a first vent thickness in an outward direction from a center and a second vent having a second vent thickness smaller than the first vent thickness, and in which the first vent thickness is three times or less than the second vent thickness.

An exemplary embodiment of the present invention provides the secondary battery in which a diameter of the vent is smaller than a diameter of an inner wall of the case.

An exemplary embodiment of the present invention provides the secondary battery in which the first current collecting plate is bent one or more times such that an end thereof is located to face any one of a direction of the opening, an outward direction of the first current collecting plate, and a direction toward a center of the first current collecting plate.

An exemplary embodiment of the present invention provides the secondary battery in which the first current collecting plate includes a flat portion horizontal to the vent and a bent portion bent to form a predetermined angle with the flat portion.

An exemplary embodiment of the present invention provides the secondary battery in which the bent portion is horizontal to an inner wall of the case.

An exemplary embodiment of the present invention provides the secondary battery in which the bent portion is in contact with the inner wall of the case.

An exemplary embodiment of the present invention provides the secondary battery in which the bent portion includes a first bent portion bent to form a predetermined angle with the flat portion and a second bent portion bent to form a predetermined angle with the first bent portion.

### [Advantageous Effects]

In the secondary battery according to the exemplary embodiment of the present invention, a space where the secondary battery realizes energy can be maximized.

### [Brief Description of Drawings]

FIG. 1 is a cross-sectional view showing a secondary battery according to an exemplary embodiment of the present invention.
FIG. 2 is a cross-sectional view showing a secondary battery according to another exemplary embodiment of the present invention.
FIG. 3 is a cross-sectional view showing a secondary battery according to still another exemplary embodiment of the present invention.
FIG. 4 is an enlarged view of a contact surface of a case, a vent, and a first current collecting plate according to an exemplary embodiment of the present invention.
FIG. 5 is an enlarged view of a portion where a vent and a first current collecting plate according to an exemplary embodiment of the present invention are welded.

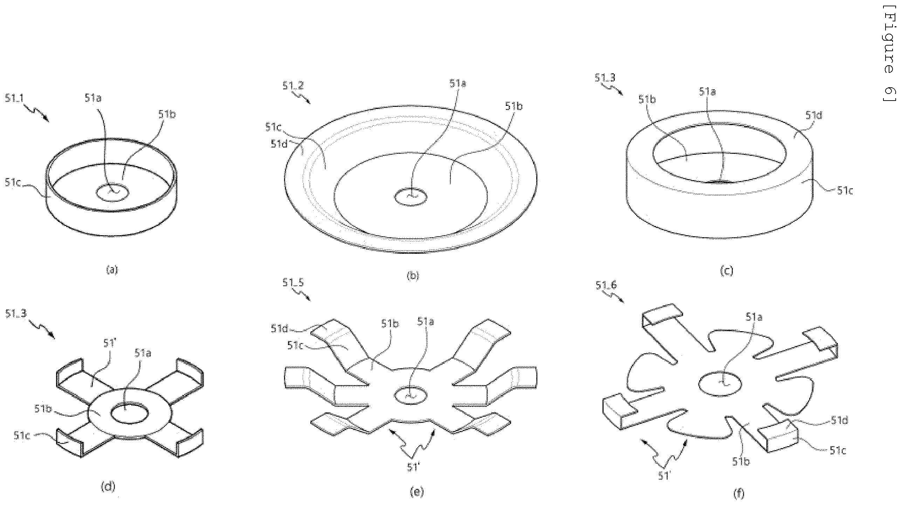

FIG. 6(a) is a perspective view showing a first current collecting plate according to an exemplary embodiment of the present invention, FIG. 6(b) is a perspective view showing a first current collecting plate according to another exemplary embodiment of the present invention, FIG. 6(c) is a perspective view showing a first current collecting plate according to still another exemplary embodiment of the present invention, FIG. 6(d) is a perspective view showing a first current collecting plate according to yet still another exemplary embodiment of the present invention, FIG. 6(e) is a perspective view showing a first current collecting plate according to a further exemplary embodiment of the present invention, and FIG. 6(f) is a perspective view showing a first current collecting plate according to a still further exemplary embodiment of the present invention.

### <Explanation of Reference Numerals and Symbols>

100a, 100b, 100c: secondary battery
10: electrode assembly
11: core part
20: case
30: vent
31: first surface
32: second surface
33: vent notch
40: first electrode terminal
41: first terminal gasket
51, 51_1, 51_2, 51_3, 51_4, 51_5, 51_6: first current collecting plate
51': sub-plate
51a: plate hole
51b: flat portion
51c: bent portion, first bent portion
51d: second bent portion
52: second current collecting plate
60: second electrode terminal
1: first weld portion
2: second weld portion
3: third weld portion

### [Best Mode]

The detailed description of the present invention is intended to completely explain the present invention to one skilled in the art. Throughout the specification, unless explicitly described to the contrary, when one component "comprises (includes)" another component or "characterized by" having a certain structure and a certain shape, this means that other components, structures, and shapes may be included without being excluded.

The present invention may be variously modified and may have various exemplary embodiments, and specific exemplary embodiments will be described in detail in the detailed description. However, the description of the exemplary embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, it should be noted that the drawings are provided for illustrating the present invention, and the scope of the present invention is not limited by the drawings.

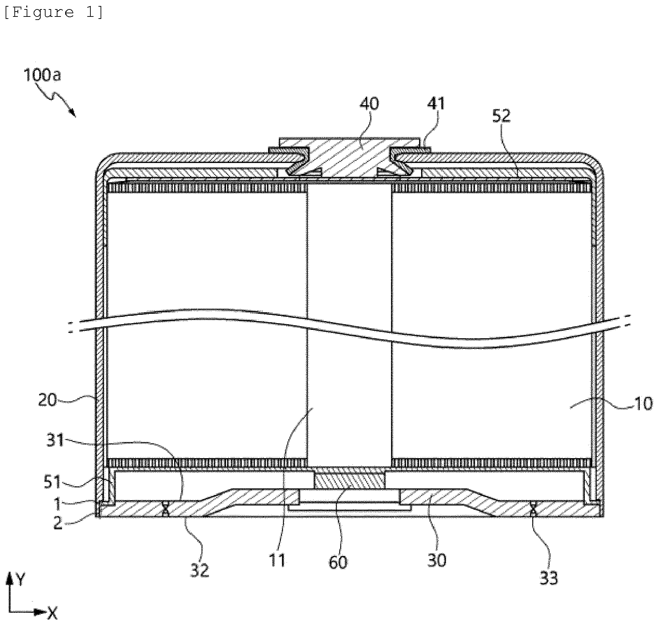

FIG. 1 is a cross-sectional view showing a secondary battery 100a according to an exemplary embodiment of the present invention.

The secondary battery 100 according to the present invention includes an electrode assembly 10, a case 20, a vent 30 and a first current collecting plate 51.

The electrode assembly 10 is a chargeable/dischargeable power generating device having a laminate structure of electrodes (not shown) and a separator (not shown), and may include a jelly-roll type structure in which long sheet-like electrodes coated with active materials are wound with a separator being interposed therebetween.

For example, the electrodes may include a negative electrode and a positive electrode, and the negative electrode, the separator, and the positive electrode may be sequentially laminated to form the electrode assembly 10. The electrode assembly 10 according to the present invention may be formed by stacking a plurality of electrode assemblies 10 in which a negative electrode, a separator and a positive electrode are sequentially laminated.

The electrode assembly 10 according to an exemplary embodiment may have an electrode where an active material portion (not shown) coated with an active material is located along a longitudinal direction of a current collector and uncoated portions (not shown) on which the active material is not coated are located on both sides of the active material portion, i.e., both sides of the active material portion located in the longitudinal direction of the active material portion. Here, a length of the current collector may refer to a direction in which a distance between both ends is the longest when the wound electrode assembly 10 is unfolded.

The active material may include a positive electrode active material and a negative electrode active material, and the positive electrode active material may include a lithium cobalt oxide with a high operating voltage and excellent capacity characteristics, a lithium nickel oxide with a high reversible capacity and easy to implement a large-capacity battery, a lithium nickel cobalt oxide where a part of nickel is substituted with cobalt, a lithium nickel cobalt metal oxide where a part of nickel is substituted with manganese, cobalt, or aluminum, a lithium manganese-based oxide excellent in thermal stability and low in cost, a lithium iron phosphate excellent in stability, and the like.

The negative electrode active material may be, for example, a carbon material such as crystalline carbon, amorphous carbon, carbon composite, or carbon fiber, lithium metal, a lithium alloy, or the like. In this case, the negative electrode active material may further include, for example, non-graphite-based SiO (silica), SiC (silicon carbide) or the like for high-capacity design.

In the electrode assembly 10, uncoated portions located at both ends of the electrode wound on the outermost part of the electrode assembly 10 in an opposite direction to a winding center part (or core part) may be notched and bent toward a center part of the electrode assembly 10. Alternatively, the entire uncoated portion wound on the electrode assembly 10 may be notched, and the notched portion may be bent in an outer direction of the electrode assembly 10.

In another exemplary embodiment, the electrode may include an active material portion and an uncoated portion on one side of the current collector. The uncoated portion may be located at one or more of both ends of one side of the current collector, or may be located in a middle region.

An electrode tab (not shown) may be provided on at least a part of one side of the uncoated portion. A part of the electrode tab may be in contact with the uncoated portion, and a part of the electrode tab may protrude in a width (W) direction of the current collector. The electrode tab may transfer electrons collected in the current collector to an external circuit.

In the secondary battery 100 according to the present invention, the electrode assembly 10 may have a core part 11 formed at the center by removing a winding core. The secondary battery 100 may further include a center pin (not shown) in the core part 11. The center pin may prevent the electrode assembly 10 wound in a jelly-roll form from unwinding and may serve as a movement passage for gas inside the cylindrical secondary battery 100.

The case 20 may have a column structure with a space formed therein. The case 20 may accommodate the electrode assembly 10 including electrodes and a separator and an electrolyte solution (not shown) in the internal space. One side of the case 20 may have an open structure, and the other side may have a through-hole (not shown). The through-hole may have a circular or polygonal shape, and a diameter and a width of the through-hole may be smaller than a diameter of the case 20. Here, one side and the other side of the case 20 mean ends located at the top and bottom along a direction of gravity or a center axis of the case 20.

The case 20 according to the present invention may be provided in the form of a column whose diameter is constant or becomes narrower or wider along an axis direction of the case 20. The case 20 according to the present invention is coupled to the vent 30 and the first current collecting plate 51 by welding and does not include a beaded portion or a crimped portion.

Therefore, in the secondary battery 100 according to the present invention, a gap between the electrode assembly 10 and the vent 30 formed by the beaded portion and the crimped portion is conceivable, such that a space for realizing energy can be maximized.

A height of the case 20 may be made equal to or higher than that of the electrode assembly 10.

The case 20 may be made of a lightweight conductive metal material such as aluminum or aluminum alloy.

Dimensions of the case 20 may be 30 mm to 55 mm in circular diameter at both ends and 60 mm to 120 mm in height. For example, the circular diameter x height of the cylindrical battery case may be 40 mm x 60 mm, 40 mm x 80 mm, 40 mm x 90 mm, or 40 mm x 120 mm.

The vent 30 is a thin film structure through which current flows, and may be located at the opening of the case 20. In an exemplary embodiment, a diameter of the vent 30 may be made equal to an inner diameter of the case 20. The vent 30 may include a first surface 31 facing the first current collecting plate 51 and a second surface 32 opposite to the first surface 31. A side surface of the vent 30 may be in contact with an inner surface of the case 20, and a contact surface of the side surface of the vent 30 and the case 20 may be welded to fix the case 20 and the vent. Here, the side surface of the vent 30 is a surface connecting the first surface 31 and the second surface 32, and refers to a surface located perpendicular to the first surface 31 and the second surface 32.

The vent 30 may protrude in a lower part direction from an edge toward a center. In other words, the vent 30 may protrude stepwise in a direction, in which the first current collecting plate 51 is located, from the edge toward the center.

The vent 30 may include one or more vent notches 33 that burst when a pressure inside the case 20 exceeds a critical value. The vent notch 33 may be provided on at least one of the first surface 31 and the second surface 32 of the vent 30. The vent notch 33 may be provided on the surface of the vent 30 in a continuous or discontinuous circular pattern, a straight line pattern, or other patterns. A depth, a width, and the like of the vent notch 33 may be formed so that the vent notch bursts when the pressure inside the case 20 is within a range of 15 kgf/cm² to 35 kgf/cm².

The secondary battery 100 according to the present invention may further include a current breaking member (not shown). The current breaking member is a plate member through which current flows, and may be formed with through-holes for discharging gas.

The current breaking member may be located between the vent 30 and the first current collecting plate 51. The current breaking member may include a contact portion protruding toward the first surface 31 of the vent 30 at the center and contacting the vent 30.

The secondary battery 100 according to the present invention may include a first electrode terminal 40. The first electrode terminal 40 is coupled to the through-hole of the battery case 20 and may be electrically connected to the electrode assembly 10.

The first electrode terminal 40 may be made of a conductive metal material. For example, the first electrode terminal 40 may be made of aluminum, but is not limited thereto. The first electrode terminal 40 may exhibit a polarity different from that of the battery case 20. For example, when the battery case 20 exhibits a negative polarity, the first electrode terminal 40 may exhibit a positive polarity.

The secondary battery 100 according to the present invention may include a first terminal gasket 41 between the first electrode terminal 40 and an inner surface of the through-hole so that the first electrode terminal 40 exhibits a polarity different from that of the battery case 20. The first terminal gasket 41 may be made of a polymer resin having insulation and elasticity, and therefore, may prevent contact between the first electrode terminal 40 and the battery case 20.

The first terminal gasket 41 may be made of, for example, polypropylene, polybutylene terephthalate, polyfluorinated ethylene, or the like, but the present invention is not limited thereto.

FIG. 6(a) is a perspective view showing a first current collecting plate 51_1 according to an exemplary embodiment of the present invention, FIG. 6(b) is a perspective view showing a first current collecting plate 51_2 according to another exemplary embodiment of the present invention, FIG. 6(c) is a perspective view showing a first current collecting plate 51_3 according to still another exemplary embodiment of the present invention, FIG. 6(d) is a perspective view showing a first current collecting plate 51_4 according to yet still another exemplary embodiment of the present invention, FIG. 6(e) is a perspective view showing a first current collecting plate 51_5 according to a further exemplary embodiment of the present invention, and FIG. 6(f) is a perspective view showing a first current collecting plate 51_6 according to a still further exemplary embodiment of the present invention.

The first current collecting plate 51 may be located on one side of the electrode assembly 10 and located between the electrode assembly 10 and the vent 30, and therefore, may be electrically connected to the electrode assembly 10 and the vent 30. The first current collecting plate 51 is welded to the uncoated portion of the electrode assembly 10 and the vent 30, thereby preventing the electrode assembly 10 from vibrating due to the gap between the electrode assembly 10 and the case 20 when the battery vibrates up and down.

The first current collecting plate 51 may be bent one or more times such that an end of the first current collecting plate 51 is located to face a direction of the opening of the case 20, an outward direction of the first current collecting plate 51 or a direction toward a center of the first current collecting plate 51.

The first current collecting plates 51_1 and 51_4 according to exemplary embodiments each include a flat portion 51b in the form of a plate horizontal to the vent 30 and a bent portion 51c bent to form a predetermined angle with the flat portion 51b.

The bent portion 51c may include a surface horizontal to an inner wall of the case 20. For example, the bent portion 51c may be bent to form an angle of 90 degrees with the flat portion 51b.

The bent portion 51c may be spaced apart from the inner wall of the case 20 or may be located in contact with the inner wall of the case 20. When the bent portion 51c comes into contact with the inner wall of the case 20, the bent portion 51c may support the first current collecting plates 51_1 and 51_4 so that the first current collecting plates 51_1 and 51_4 do not move due to external vibration and pressure.

The first current collecting plates 51_2 and 51_5 according to other exemplary embodiments each include a flat portion 51b in the form of a plate horizontal to the vent 30, a first bent portion 51c bent to form a predetermined angle with the flat portion 51b, and a second bent portion 51d bent to form a predetermined angle with the first bent portion 51c.

In the first current collecting plates 51_2 and 51_5, any one of the first bent portion 51c and the second bent portion 51d may include a surface horizontal to the inner wall of the case 20. For example, the first bent portion 51c may be bent to form an angle of 90 degrees with the flat portion 51b and may include a surface horizontal to the inner wall of the case 20. The second bent portion 51d may be bent to form an angle of 90 degrees with the first bent portion 51c such that an end of each of the first current collecting plates 51_2 and 51_5 faces outward. That is, the second bent portion 51d may be stacked on an upper portion of an end face of the case 20.

The first current collecting plates 51_3 and 51_6 according to other exemplary embodiments may each include a flat portion 51b in the form of a plate horizontal to the vent 30, a first bent portion 51c bent to form a predetermined angle with the flat portion 51b and a second bent portion 51d bent to form a predetermined angle with the first bent portion 51c.

In the first current collecting plates 51_3 and 51_6, any one of the first bent portion 51c and the second bent portion 51d may include a surface horizontal to the inner wall of the case 20. For example, the first bent portion 51c may be bent to form an angle of 90 degrees with the flat portion 51b and may include a surface horizontal to the inner wall of the case 20. The second bent portion 51d may be bent to form an angle of 90 degrees with the first bent portion 51c such that an end of each of the first current collecting plates 51_3 and 51_6 faces the direction toward the center of each of the first current collecting plates 51_3 and 51_6. That is, the second bent portion 51d may be stacked on an upper portion of an end face of the case 20.

Referring to FIGS. 6(a), 6(b) and 6(c), the first current collecting plate 51 may have a disk shape. The flat portion 51b may include a plate hole 51a at a position corresponding to the core part 11 of the electrode assembly 10.

Alternatively, referring to FIGS. 6(d), 6(e) and 6(f), the first current collecting plates 51_4, 51_5 and 51_6 may each include a plate hole 51a formed at a position corresponding to the core part 11 of the electrode assembly 10, and a plurality of sub-plates 51' extending radially from a center portion where the plate hole 51a is formed.

At least one of the sub-plates 51' may include a flat portion 51b and a bent portion 51c.

For example, the first current collecting plates 51_3 and 51_4 each may include eight sub-plates. One of the eight sub-plates is randomly selected as a No. 1 plate, and then, No. 2, and No. 3 to No. 8 plates are selected in a clockwise direction. Here, the odd-numbered sub-plates each may include only the flat portion 51b, and the even-numbered sub-plates each may include the flat portion 51b and the bent portion 51c. Also, the shapes of the flat portions 51b of the odd-numbered and even-numbered sub-plates may be the same or different.

A diameter of the plate hole 51a may be formed to be the same as or smaller than a diameter of the core part of the electrode assembly 10.

The first current collecting plate 51 may include a ring-shaped second electrode terminal 60, which protrudes in the direction in which the vent 30 is located, in the plate hole 51a. In other words, the second electrode terminal 60 may protrude in a direction, in which the vent 30 is located along a circumference of the core part, at a position corresponding to the core part on one side of the first current collecting plate 51.

The secondary battery 100 according to the present invention may include weld portions 1, 2 and 3. The weld portions 1, 2 and 3 may be different in position according to the shapes of the vent 30 and the first current collecting plate 51.

The secondary battery 100a according to an exemplary embodiment may include a first weld portion 1 where a contact surface of the first current collecting plate 51 and the case 20 is welded and a second weld portion 2 where a contact surface of the case 20 and the vent 30 is welded.

The case 20 may be provided as a cylindrical structure having a certain thickness and including a space capable of accommodating the electrode assembly and the electrolyte solution therein. The thickness of the case 20 may decrease in the direction of the opening. Specifically, the thickness of the case 20 may decrease by a certain length in the direction of gravity at the end of the case 20 where the opening is formed. Here, the certain length may correspond to a sum of the thicknesses of the vent 30 and the first current collecting plate 51 or may be greater than the sum of the thicknesses of the vent 30 and the first current collecting plate 51.

The case 20 may include a first case adjacent to the opening and having a first case thickness, and a second case having a second case thickness thicker than the first case. The second case thickness may be three times or less than the first case thickness. Preferably, the second case thickness may be two to three times greater than the first case thickness.

For example, the first case thickness may be 0.5 mm or less, and the second case thickness may be 1.5 mm or less. Preferably, the first case thickness may be 0.4 mm or less, the second case thickness may be 1.2 mm or less, and more preferably, the first case thickness may be 0.2 mm to 0.3 mm or less, and the second case thickness may be 0.4 mm to 0.9 mm.

A length of the first case may be 5% or less based on 100% of a total length of the case 20. Preferably, the length of the first case may be 2% or less, and more preferably 1.5% or less.

The first weld portion 1 and the second weld portion 2 may be welded by any one of following welding methods: seam welding, ultrasonic welding, laser welding, and cooling welding. Preferably, the first weld portion 1 and the second weld portion 2 may be seam welded, which is advantageous for preventing a weld pin hole. They may be welded using seam welding.

Therefore, when the thickness of the first case welded with the vent 30 and the first current collecting plate 51 exceeds 0.4 mm, there occurs problems in that electrical resistance heat cannot pass through the case 20 and heat is not transferred to the contact surface of the case 20 and the first current collecting plate 51 and the contact surface of the case 20 and the vent 30, resulting in a deterioration in the quality of the first and second weld portions 1 and 2 and an increase in the frequency of failure of the secondary battery.

A diameter of the vent 30 may be smaller than a diameter of the inner wall of the case 20. Specifically, the diameter of the vent 30 may be smaller than the diameter of the inner wall of the first case.

The first current collecting plate 51 may be bent one or more times such that an end of the first current collecting plate 51 is located in an outward direction, i.e., in a direction opposite to the direction toward the center of the first current collecting plate 51. A length from the center of the first current collecting plate 51 to the end facing the outward direction (a radius of the first current collecting plate 51) may be smaller than a radius of the inner wall of the first case.

The first weld portion 1 may be located at a lower portion of the second weld portion 2. Therefore, the first current collecting plate 51 may not be exposed to the outside, so it is possible to prevent the first current collecting plate 51 from being damaged due to external force, and to prevent the performance of the secondary battery 100b from being lowered due to increased resistance caused by damage to the first current collecting plate 51.

The vent 30 may decrease in thickness from the center toward the outer side. The vent 30 may include a first vent having a first vent thickness in an outward direction from the center and a second vent having a second vent thickness different from that of the first vent. The second vent may be located at an edge of the vent 30. Here, the edge includes a certain width in the direction toward the center from an outer surface of the vent 30.

The first vent thickness may be three times or less than the second vent thickness. Preferably, the first vent thickness may be 1.5 to 3 times greater than the second vent thickness.

For example, the first vent thickness may be 0.9 mm to 7.5 mm, and the second vent thickness may be 0.6 mm to 2.5 mm. Preferably, the first vent thickness is 0.75 mm to 4.5 mm, the second vent thickness may be 0.5 mm to 1.5 mm, and more preferably the first vent thickness is 0.6 mm to 2.25 mm, and the second vent thickness is 0.4 mm to 0.75 mm.

When the first current collecting plate 51 includes a flat portion, a first bent portion and a second bent portion, the edge of the vent 30, i.e., the width of the second vent may correspond to a width of the second bent portion of the first current collecting plate 51 or may be wider than the second bent portion 51d.

For example, the width of the second vent may be 20% or less of the radius of the vent 30. Preferably, the width of the second vent and the width of the second bent portion 51d may be 5% to 15% of the radius of the vent 30, and more preferably, the width of the second vent and the width of the second bent portion 51d may be 7% to 15% of the radius of the vent 30.

In the secondary battery 100a according to an exemplary embodiment, a contact surface of the second vent and the second bent portion may be welded, and the vent 30 and the first current collecting plate 51 may be welded to increase fixing force of the first current collecting plate 51, thereby increasing durability of the secondary battery 100a against external vibration.

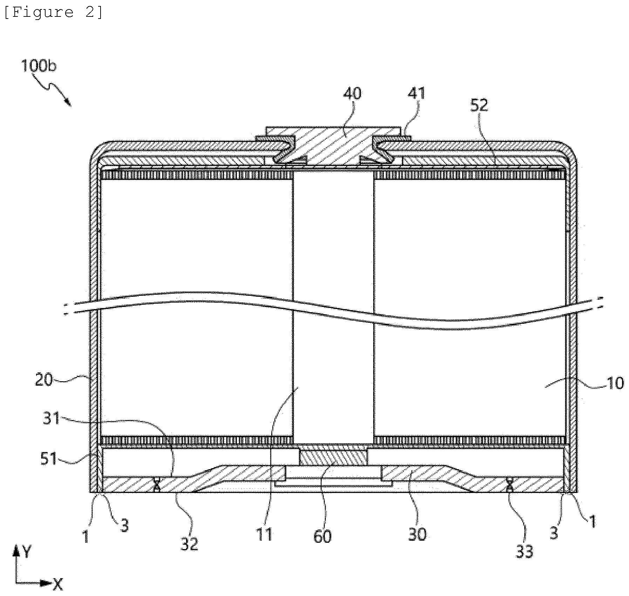

FIG. 2 is a cross-sectional view showing a secondary battery 100b according to another exemplary embodiment of the present invention. The secondary battery 100b according to another exemplary embodiment may include a first weld portion 1 where a contact surface of the first current collecting plate 51 and the case 20 is welded, and a third weld portion 3 where a contact surface of the first current collecting plate 51 and the vent 30 is welded.

The diameter of the vent 30 may be smaller than the diameter of the inner surface of the case 20, and the first current collecting plate 51 may be bent one or more times such that an end of the first current collecting plate 51 is located in the direction of the opening of the case 20.

Specifically, a first current collecting plate 51' may be located between the inner surface of the case 20 and the outer surface of the vent 30. Therefore, the first weld portion 1 and the third weld portion 3 may be located along a circumference of an outer surface of the vent 30. In other words, the first weld portion 1 and the third weld portion 3 may be provided on an upper surface of the secondary battery 100a, i.e., on a surface in the direction in which the opening is located.

In the secondary battery 100b according to another exemplary embodiment, ends of the case 20, the vent 30, and the first current collecting plate 51 may be located on the same line. In other words, the ends of the case 20, the vent 30, and the first current collecting plate 51 may be located on a line perpendicular to the inner wall of the case 20.

Alternatively, the ends of the case 20, the vent 30 and the first current collecting plate 51 may form a step.

The ends of the case 20 and the vent 30 may be located on the same line, and the end of the first current collecting plate 51 may be located lower than the case 20 and the vent 30. Here, the lower part is in a direction of a lower surface of the case 20, the direction in which the opening is formed in the case 20 is the upper part, and the opposite direction is the lower part.

The secondary battery 100b according to another exemplary embodiment may further include an additional weld portion for welding the first weld portion 1 and the third weld portion 2. The additional weld portion may be welded by an arc welding method. The additional weld portion may be located along the circumferences of the case 20 and the vent 30. The additional weld portion welded by the arc welding may include a weld material, and the weld material may include a conductive material. The weld material may cover all the ends of the case 20, the vent 30, and the first current collecting plate 51 to prevent the first current collecting plate 51 from being exposed to the outside.

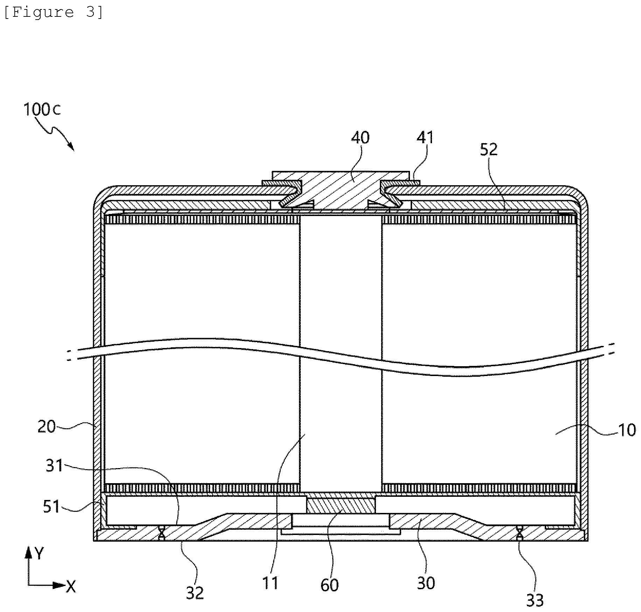

FIG. 3 is a cross-sectional view showing a secondary battery 100c according to still another exemplary embodiment of the present invention. The secondary battery 100c according to still another exemplary embodiment may include a second weld portion 2 where a contact surface of the case 20 and the vent 30 is welded and a third weld portion 3 where a contact surface of the first current collecting plate 51 and the vent 30 is welded.

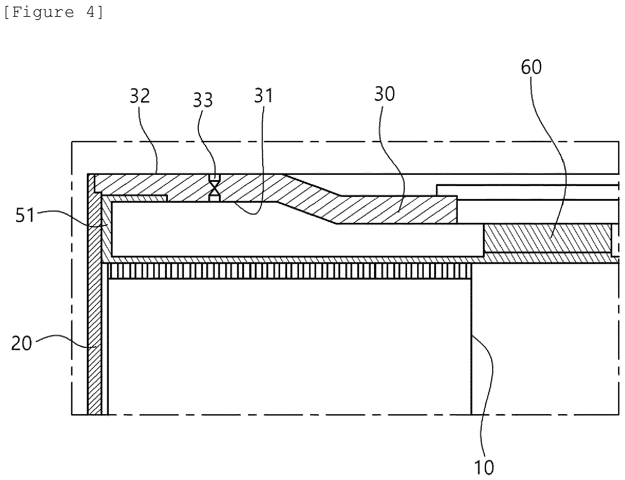

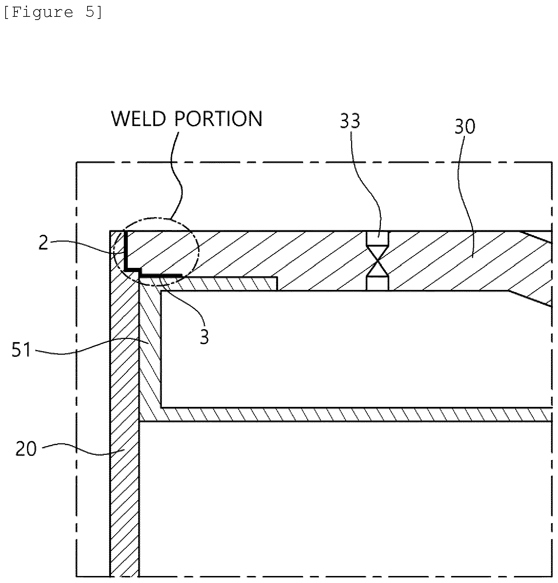

FIG. 4 is an enlarged view of a contact surface of the case 20, the vent 30, and the first current collecting plate 51 of the secondary battery 100c according to still another exemplary embodiment of the present invention, and FIG. 5 is an enlarged view of a portion where the vent 30 and the first current collecting plate 51 of the secondary battery 100c according to still another exemplary embodiment of the present invention are welded.

In the secondary battery 100c according to still another exemplary embodiment, the second weld portion 2 is located along the outer circumference of the vent 30, and the third weld portion 3 is located along an edge circumference of a lower surface of the vent 30. Here, the lower surface is a surface facing the first current collecting plate 51 and refers to the first surface 31 of the vent 30.

For example, the first current collecting plate 51 may include a structure where it is bent one or more times such that the end faces the direction toward the center of the first current collecting plate 51, and may include a flat portion 51b, a first bent portion 51c, and a second bent portion 51d. In this case, a part of the first bent portion 51c comes into contact with the inner wall of the case 20. That is, the first bent portion 51c may include a surface parallel to the inner wall of the case 20.

The second bent portion 51d may come into contact with the first surface 31 of the vent 30, and therefore, the second bent portion 51d may further include a surface parallel to the first surface 31 of the vent 30.

Alternatively, the first current collecting plate 51 may include a structure where it is bent one or more times such that the end faces the direction toward the center of the first current collecting plate 51, and may include the first bent portion 51c including a surface parallel to the flat portion 51b and the inner wall of the case 20, and an end of the first bent portion 51c may face the direction of the opening. In this case, the end of the first bent portion 51c may be in contact with and welded to the first surface 31 of the vent 30.

The case 20 may be provided as a cylindrical structure having a certain thickness and including a space capable of accommodating the electrode assembly and the electrolyte solution therein. The thickness of the case 20 may decrease in the direction of the opening. Specifically, the thickness of the case 20 may decrease by a certain length in the direction of gravity at the end of the case 20 where the opening is formed. Here, the certain length may correspond to the thickness of the vent 30.

The case 20 may be provided as a cylindrical structure having a certain thickness and including a space capable of accommodating the electrode assembly and the electrolyte solution therein. The thickness of the case 20 may decrease in the direction of the opening. Specifically, the thickness of the case 20 may decrease by a certain length in the direction of gravity at the end of the case 20 where the opening is formed. Here, the certain length may correspond to a sum of the thicknesses of the vent 30 and the first current collecting plate 51 or may be greater than the sum of the thicknesses of the vent 30 and the first current collecting plate 51.

The case 20 may include a first case adjacent to the opening and having a first case thickness, and a second case having a second case thickness thicker than the first case. The second case thickness may be three times or less than the first case thickness. Preferably, the second case thickness may be two to three times greater than the first case thickness.

For example, the first case thickness may be 0.5 mm or less, and the second case thickness may be 1.5 mm or less. Preferably, the first case thickness may be 0.4 mm or less, the second case thickness may be 1.2 mm or less, and more preferably, the first case thickness may be 0.2 mm to 0.3 mm or less, and the second case thickness may be 0.4 mm to 0.9 mm.

The length of the first case may be 5% or less based on 100% of a total length of the case 20. Preferably, the length of the first case may be 2% or less, and more preferably 1.5% or less.

A diameter of the vent 30 may be smaller than a diameter of the inner wall of the case 20. Specifically, the diameter of the vent 30 may be smaller than the diameter of the inner wall of the first case.

The vent 30 may decrease in thickness from the center toward the outer side. The vent 30 may include a first vent whose thickness is constant in an outward direction from the center and a second vent whose thickness is different from that of the first vent. The second vent may be located at an edge of the vent 30. Here, the edge includes a certain width in the direction toward the center from an outer surface of the vent 30.

The first vent thickness may be three times or less than the second vent thickness. Preferably, the first vent thickness may be 1.5 to 3 times greater than the second vent thickness.

For example, the first vent thickness may be 0.9 mm to 7.5 mm, and the second vent thickness may be 0.6 mm to 2.5 mm. Preferably, the first vent thickness is 0.75 mm to 4.5 mm, the second vent thickness may be 0.5 mm to 1.5 mm, and more preferably the first vent thickness is 0.6 mm to 2.25 mm, and the second vent thickness is 0.4 mm to 0.75 mm.

The width of the second vent may correspond to or be wider than the width of the second bent portion 51d or the thickness of the end of the first bent portion 51c. A contact surface of the second vent and the second bent portion 51d or the first bent portion 51c may be welded (third weld portion). When the second vent satisfies the thickness of the above numerical value, welding heat is transferred to the contact surface of the second vent and the second bent portion 51d or the first bent portion 51c to facilitate welding of the third weld portion 3.

For example, the width of the second vent may be 20% or less of the radius of the vent 30. Preferably, the width of the second vent and the width of the second bent portion 51d may be 5% to 15% of the radius of the vent 30, and more preferably, the width of the second vent and the width of the second bent portion 51d may be 7% to 15% of the radius of the vent 30.

The first weld portion 1, the second weld portion 2, and the third weld portion 3 according to an exemplary embodiment, another exemplary embodiment, and still another exemplary embodiment may be located one or two or more.

For example, when the first current collecting plate 51 is provided in the form of a plate, the first weld portion 1, the second weld portion 2, and the third weld portion 3 may be each provided one, and when the first current collecting plate 51 includes a plurality of radial sub-plates, the first weld portion 1, the second weld portion 2, and the third weld portion 3 may be provided in plural and spaced apart from each other, respectively.

The secondary battery 100 according to the present invention may further include a second current collecting plate 52. The second current collecting plate 52 may be provided at a position facing the first current collecting plate 51 and may be located between the electrode assembly 10 and the first electrode terminal 40. The second current collecting plate 52 may be made of a conductive material and may electrically connect the electrode assembly 10 and the first electrode terminal 40.

Another exemplary embodiment aspect of the present invention provides a battery module and a battery pack including the secondary battery according to the above-described exemplary embodiment.

Although the present invention has been described with reference to preferred exemplary embodiments, it will be understood by one skilled in the art that various modifications and variations can be made in the present invention without departing from the technical spirit and scope of the present invention.

## Claims

1. A secondary battery comprising:
an electrode assembly;
a case opened on one side and configured to accommodate the electrode assembly therein;
a vent coupled to the opening of the case; and
a first current collecting plate electrically connected to the electrode assembly,
wherein the first current collecting plate is welded and electrically connected to at least the case or the vent.

2. The secondary battery of claim 1, comprising a first weld portion where a contact surface of the first current collecting plate and the case is welded, and a third weld portion where a contact surface of the first current collecting plate and the vent is welded.

3. The secondary battery of claim 2, wherein the first weld portion and the third weld portion are located along a circumference of an outer surface of the vent.

4. The secondary battery of claim 2, wherein the first weld portion and the third weld portion are located along a circumference of the case adjacent to the opening.

5. The secondary battery of claim 2, wherein a diameter of the vent is smaller than a diameter of an inner wall of the case.

6. The secondary battery of claim 1, comprising a first weld portion where a contact surface of the first current collecting plate and the case is welded, and a second weld portion where a contact surface of the case and the vent is welded.

7. The secondary battery of claim 6, wherein the first weld portion and the second weld portion are located along a circumference of an inner wall of the case.

8. The secondary battery of claim 6, wherein a diameter of the vent is smaller than a diameter of an inner wall of the case.

9. The secondary battery of claim 6, wherein the case comprises a first case adjacent to the opening and having a first case thickness, and a second case having a second case thickness thicker than the first case, and
wherein the second case thickness is three times or less than the first case thickness.

10. The secondary battery of claim 6, wherein a length of the first case is 5% or less based on 100% of a total length of the case.

11. The secondary battery of claim 6, wherein the vent comprises a first vent having a first vent thickness in an outward direction from a center and a second vent having a second vent thickness smaller than the first vent thickness, and
wherein the first vent thickness is three times or less than the second vent thickness.

12. The secondary battery of claim 1, comprising a second weld portion where a contact surface of the case and the vent is welded, and a third weld portion where a contact surface of the first current collecting plate and the vent is welded.

13. The secondary battery of claim 12, wherein the second weld portion is located along a circumference of the vent and the third weld portion is located along a circumference of a lower surface of the vent.

14. The secondary battery of claim 12, wherein the case comprises a first case adjacent to the opening and having a first case thickness, and a second case having a second case thickness thicker than the first case, and
wherein the second case thickness is three times or less than the first case thickness.

15. The secondary battery of claim 14, wherein a length of the first case is 5% or less based on 100% of a total length of the case.

16. The secondary battery of claim 12, wherein the vent comprises a first vent having a first vent thickness in an outward direction from a center and a second vent having a second vent thickness smaller than the first vent thickness, and
wherein the first vent thickness is three times or less than the second vent thickness.

17. The secondary battery of claim 12, wherein a diameter of the vent is smaller than a diameter of an inner wall of the case.

18. The secondary battery of claim 1, wherein the first current collecting plate is bent one or more times such that an end thereof is located to face any one of a direction of the opening, an outward direction of the first current collecting plate, and a direction toward a center of the first current collecting plate.

19. The secondary battery of claim 18, wherein the first current collecting plate comprises a flat portion horizontal to the vent and a bent portion bent to form a predetermined angle with the flat portion.

20. The secondary battery of claim 19, wherein the bent portion is horizontal to an inner wall of the case.

21. The secondary battery of claim 19, wherein the bent portion comprises a first bent portion bent to form a predetermined angle with the flat portion and a second bent portion bent to form a predetermined angle with the first bent portion.

22. A battery pack comprising at least one secondary battery of any one of claims 1 to 21.
